Europäisches Patentamt

**European Patent Office**

**Office européen des brevets**

(19)

(11) Numéro de publication: **0 033 278**

**A2**

(12) # DEMANDE DE BREVET EUROPEEN

(21) Numéro de dépôt: **81400102.0**

(22) Date de dépôt: **26.01.81**

(51) Int. Cl.³: **H 05 B 3/80**
**H 05 B 1/02, A 01 K 63/00**

(30) Priorité: **29.01.80 FR 8001875**

(43) Date de publication de la demande:
**05.08.81 Bulletin 81/31**

(84) Etats contractants désignés:
**AT BE CH DE FR GB IT LI LU NL SE**

(71) Demandeur: **GLORIA S.A. Société anonyme dite**
**14, rue Bassano**
**F-75783 Paris Cedex 16(FR)**

(72) Inventeur: **Dumas, Jean-Claude**
**Villa la Bohème**
**F-13 390 Auriol(FR)**

(74) Mandataire: **Combe, André et al,**
**CABINET BEAU DE LOMENIE 55 rue d'Amsterdam**
**F-75008 Paris(FR)**

(54) **Résistances chauffantes et thermostats pour aquariophilie.**

(57) La présente invention concerne une résistance chauffante utilisable notamment pour aquarium, caractérisée en ce qu'elle est constituée par une résistance électrique proprement dite, revêtue d'un matériau thermoconducteur étanche et moulable, tel qu'une résine de préférence, pouvant être mis en forme par des procédés connus.

EP 0 033 278 A2

Croydon Printing Company Ltd.

Résistances chauffantes et thermostats pour aquariophilie.

La présente invention concerne de nouvelles résistances chauffantes et les thermostats employant lesdites résistances utilisables en aquariophilie.

On sait que les aquariums doivent être convenablement chauffés et que la température de fonctionnement choisie doit être maintenue aussi constante que possible dans le temps. Pour réaliser ces opérations, il existe, dans le commerce, un certain nombre d'appareils, mais les appareils connus présentent tous des inconvénients notables qui se traduisent dans la pratique par une imprécision trop grande dans le réglage et la régulation de la température et, par conséquent, par des dommages pour les poissons et/ou la flore vivant dans l'aquarium.

Ainsi, par exemple, les résistances électriques servant au chauffage de l'eau des aquariums sont généralement disposées dans un tube de verre. Ces enveloppes de verre sont fragiles; de plus, la transmission des calories entre ladite résistance et l'eau s'effectue par l'intermédiaire de l'air qui entoure la résistance et du verre qui est un matériau isolant. On conçoit que, dans ces conditions, le chauffage de l'eau de l'aquarium par lesdites résistances en vue du maintien de la température de cette eau à une valeur donnée s'effectue dans des conditions qui sont thermiquement mauvaises, d'une part, dangereuses pour l'utilisateur, d'autre part (à cause de la fragilité de l'enveloppe).

La présente invention concerne donc tout d'abord une nouvelle résistance chauffante pour aquarium, caractérisée en ce qu'elle est constituée d'une résistance proprement dite obtenue par utilisation de matériaux conducteurs particulaires rendus cohérents et pouvant être mis en forme par utilisation d'une matrice en polymère hydrocarboné, le produit mis en forme étant rendu conducteur selon une valeur choisie par destruction thermique contrôlée dudit polymère hydrocarboné, ladite résistance étant revêtue d'un matériau thermoconducteur étanche et moulable, ledit matériau, étant de préférence une résine, pouvant être mis en forme par des procédés connus.

Ainsi donc, pour réaliser les éléments chauffants, on utilisera comme matériau de base des particules conductrices (par exemple des particules métalliques et/ou des particules de carbone) qui seront dispersées dans un polymère hydrocarboné. Le mélange ainsi réalisé sera mis en forme par des procédés connus, par exemple en réalisant un frittage. Puis, le matériau mis en forme sera chauffé à une température suffisante pour provoquer la destruction contrôlée du polymère et la naissance d'un matériau en forme conducteur de l'électricité suivant la valeur désirée.

La technique décrite ci-dessus pour la réalisation d'un matériau conducteur de l'électricité et pouvant être mis en forme est connue en elle-même, mais, si ce matériau est lui-même enrobé d'un composant plastique étanche et caloporteur compatible avec la résistance ainsi formée, on obtient un produit qui, tout en étant parfaitement isolant électriquement vis-à-vis de l'extérieur, est intérieurement bon conducteur de l'électricité et de la chaleur, ce qui permet, selon l'invention, de l'utiliser en aquariophilie ou dans toute autre application du même type, ce qui n'a jamais été préconisé.

Bien que ledit matériau·conducteur de l'électricité puisse être utilisé sous cette forme comme résistance chauffante, on préfère donc, selon l'invention, réaliser la résistance chauffante par enrobage du matériau électriquement conducteur; outre l'isolation électrique qui peut être ainsi réalisée et qui est indispensable si l'on veut pouvoir plonger l'élément chauffant dans l'eau, on obtient par ce procédé des caractéristiques améliorées pour les résistances proprement dites : fonctionnant à l'abri de l'air, donc de l'oxydation, elles sont moins fragiles et supportent des températures de travail plus élevées. Cet enrobage consiste à déposer sur la résistance électrique mise en forme un composé modelable. Ce composé devra avoir les propriétés suivantes :
- être étanche à l'eau aux températures de travail,
- pouvoir épouser la forme qui a été conférée à la résistance et pouvoir, de préférence, être lui-même modelable, c'est-à-dire prendre la forme extérieure souhaitée,
- être conducteur de la chaleur et être isolant électrique.

Les matériaux d'enrobage utilisables sont de préférence des résines, par exemple de type époxydes ou polyuréthanne ou polyester, que l'on a rendues conductrices de la chaleur en leur incorporant des charges convenables comme, par exemple, des oxydes métalliques. De telles résines, chargées et rendues ainsi conductrices de la chaleur, sont connues.

Ainsi, les résistances chauffantes selon l'invention sont constituées d'une résistance électrique proprement dite et d'un revêtement en matériau thermoconducteur, ce revêtement pouvant avoir une épaisseur quelconque dans la mesure où ses qualités caloporteuses restent suffisantes pour empêcher la résistance proprement dite de dépasser ses températures de fonctionnement.

L'intérêt des nouvelles résistances chauffantes pour le chauffage des aquariums réside, d'une part, dans le fait qu'elles forment un bloc compact étanche sans interposition d'air entre la résistance chauffante proprement dite et l'eau et, d'autre part, dans le fait qu'elles sont "moulables", c'est-à-dire qu'elles peuvent prendre les formes les plus diverses. Ainsi, grâce à l'invention, lesdites résistances peuvent se présenter non seulement sous forme tubulaire ou parallélépipédique, mais encore sous forme de blocs analogues aux "rochers" utilisés pour orner les aquariums ou de plaques d'épaisseur relativement mince disposées par exemple contre la paroi arrière de l'aquarium.

Un autre avantage de ces nouvelles résistances, quoique non caractéristique, est qu'elles peuvent être alimentées avec du courant alternatif ou continu, de voltage normal, ou en basse tension (6 ou 12 V), tout en fournissant les calories nécessaires. Il a été aussi constaté que la présence de carbone crée une augmentation de la valeur de la résistance électrique au fur et à mesure que la température de ladite résistance augmente; ce fait est favorable en fournissant une certaine autorégulation au mode de chauffage utilisant ces résistances. Enfin, le temps d'établissement du courant électrique dans ce type de résistances est beaucoup plus élevé que, par exemple, dans un fil métallique, ce qui leur évite un choc thermique répété dans le cas d'une utilisation pulsée (notamment en couplage avec un thermostat) et leur confère ainsi une plus grande longévité.

Cependant, l'enrobage précédemment décrit peut être aussi réalisé, selon l'invention, autour, par exemple, d'un fil métallique, ce dernier pouvant être lui-même préalablement protégé par un moulage de céramique (par exemple) selon des procédés connus; ou autour de tout autre type de résistance compatible avec ce procédé d'enrobage. On obtient ainsi des éléments chauffants qui, s'ils ne comportent pas toutes les propriétés des précédents, restent utilisables dans l'application à l'aquariophilie, avec les avantages qui ont été cités dans le cas de la création de résistances moulées, et seront décrits plus loin dans le cas de la création d'appareils combinés chauffage et thermostats compacts également moulés.

Si l'on veut réaliser un thermostat, c'est-à-dire un appareil régulateur de la température, il convient d'associer les nouvelles résistances selon l'invention à un dispositif de mesure de la température de l'aquarium et/ou de la température extérieure à chaque instant, et à un dispositif permettant la commande de l'alimentation ou de l'arrêt des résistances en fonction de la température mesurée. Ces deux types de dispositifs existent et peuvent être utilisés avec les résistances selon l'invention.

Cependant, en vue de réaliser des thermostats compacts et pour surmonter les difficultés rencontrées dans l'utilisation des dispositifs actuels, il a été mis au point un dispositif de commande électronique du fonctionnement des résistances selon l'invention.

Le principe de ce dispositif de commande est que l'alimentation de la résistance chauffante est réalisée suivant une fonction mathématique de la différence de température entre la température mesurée de l'aquarium et la température souhaitée pour ledit aquarium, laquelle peut être soit ajustée par l'utilisateur selon sa volonté, soit programmée à la construction. Cette fonction pourra être notamment une fonction de proportionnalité. De son côté, l'élément variable qui sera fonction de cette différence de température et que commandera le dispositif électronique pourra être, par exemple, la puissance fournie à la résistance ou la durée de l'alimentation; dans les deux cas, on contrôlera ainsi en permanence la puissance du système de chauffage.

Les dispositifs électroniques permettant de réaliser cette commande de fonctionnement de la résistance proportionnellement à une différence de température sont en eux-mêmes connus et ne seront donc pas décrits ici.

Le fait d'utiliser un tel mode de régulation dans les conditions décrites ci-dessus procure un avantage notable pour l'application visée, puisque la température optimale affichée sera atteinte progressivement, de façon asymptotique, et ne pourra en aucune façon être dépassée; ainsi, les poissons présents dans l'aquarium ne pourront-ils subir des surchauffes préjudiciables à leur santé. Pour obtenir ce résultat, dans le cas où la puissance disponible est limitée, le type de commande du fonctionnement de la résistance proportionnellement à la différence de température doit être réservé à une zone où la température de l'aquarium est relativement proche de la température souhaitée, ce qui sera le plus souvent le cas en marche normale. Lorsque, pour quelque raison ce ce soit, la température de l'aquarium est très en dessous de la température souhaitée, la commande du chauffage des résistances doit libérer à 100% la puissance disponible.

Les résistances selon l'invention peuvent être alimentées en courant alternatif ou continu; une caractéristique de l'invention est que, lorsque le courant utilisé est un courant alternatif, la commande de l'alimentation et de la coupure de la résistance électrique sera toujours effectuée, alors que l'intensité du courant alternatif s'annule. Cette caractéristique, que l'on peut réaliser par des moyens électroniques connus, est importante car elle permet, d'une part, d'augmenter la longévité des appareils selon l'invention et elle évite, d'autre part, l'émission de parasites.

Les commandes électroniques peuvent être montées et livrées indépendamment des résistances utilisées pour le chauffage et reliées à ces dernières lors du montage définitif de l'aquarium; mais elles peuvent également et avantageusement faire corps avec ces résistances ou être reliées à elles à la construction de façon à former un thermostat de forme convenable utilisable directement sans assemblage particulier.

Une réalisation particulièrement souhaitable de l'invention appliquée à l'aquariophilie est celle où un dispositif de mesure de la température est intégré au moulage d'enrobage de la résistance. Si celui-ci est placé de façon à lire la température interne de l'élément chauffant, il permet, associé à un circuit électronique de coupure, d'éviter la détérioration de l'élément chauffant si ce dernier atteint une température interne trop élevée (par exemple en cas de fonctionnement accidentel à l'air libre). S'il est au contraire judicieusement isolé thermiquement des résistances, il indique la température de l'eau et sert de pilote à la régulation (externe). Le couplage de deux éléments de mesure (interne et externe) permet à la fois la régulation et la coupure de l'alimentation, évitant la détérioration de l'élément chauffant en cas de fonctionnement à l'air libre.

Cette sécurité peut également s'obtenir sans utiliser le thermique comme vecteur de l'information. On pourra, par exemple, détecter la présence d'eau pour autoriser le fonctionnement de l'élément chauffant (procédé connu à revendiquer par l'aquariophilie). Puis, les commandes électroniques elles-mêmes peuvent être noyées dans un bloc de matière plastique, bloc qui est relié ou solidarisé avec le bloc des résistances chauffantes.

Ainsi, suivant l'invention, il est possible de réunir dans un seul ou plusieurs appareils monoblocs les dispositifs permettant le chauffage d'un aquarium, les mesures de températures et les commandes électroniques. On peut ainsi conférer à cet (ces) appareil(s) monobloc(s) des qualités fonctionnelles (principalement d'étanchéité et de sécurité), ou décoratives, complémentaires.

L'exemple non limitatif suivant illustre l'invention. On veut réaliser un chauffage thermostaté pour aquarium en opérant de la façon suivante.

Dans un boîtier en époxy moulé (résine du type MM 2050 de EMERSON-CUMING), on dispose une électronique de régulation constituée par une chaîne de contrôle utilisant le diagramme suivant.

Ce montage électronique comporte, en liaison avec deux thermistances lisant, l'une, la température $t_1$ interne de l'élément chauffant associé, l'autre, la température $t_2$ externe de l'eau :

- un circuit électronique $c_1$ qui permet de comparer la température $t_1$ avec une température maximale choisie (70°, par exemple),

- un circuit électronique c2 qui permet de comparer la température t2 avec une température choisie pour l'eau de l'aquarium (réglée par l'utilisateur sur un potentiomètre),

- un TRIAC, lequel contrôle l'alimentation électrique de la résistance chauffante.

Le circuit électronique c2 est conçu et utilisé de façon que, lorsque la différence de température entre la température t2 mesurée et la température choisie est supérieure à une certaine valeur, la résistance reçoive la totalité du courant électrique de chauffage et que, lorsque ladite différence de température est inférieure à une certaine valeur, la résistance reçoive des impulsions électriques dont la durée est proportionnelle à la différence de température.

Par ailleurs, une sécurité supplémentaire est obtenue par le circuit c1 qui coupe l'alimentation de l'élément chauffant quand t1 est supérieure à la valeur maximale arbitrairement admise (70° dans notre exemple).

L'ensemble électronique défini ci-dessus est pourvu des moyens nécessaires à son alimentation électrique.

Cette électronique en place, une résine époxy est alors coulée, complétant le boîtier et transformant ce dernier en un objet monobloc étanche d'où sortent les fils de connexion au secteur ou à la batterie et les fils de connexion à la résistance et aux thermistances.

Sur le dessus du boîtier, il reste apparent, après moulage, la diode lumineuse qui indique les phases du fonctionnement de l'appareil, et l'axe du potentiomètre de réglage, dont la mobilité a été protégée du moulage par un joint torique qui assure, par ailleurs, l'étanchéité de cette ouverture. Un bouton de réglage complète le système.

Côté résistance, la construction est réalisée dans une coquille prémoulée en époxy caloporteuse du type MT 2850 de EMERSON-CUMING.

A l'intérieur de cette coquille, sont disposées deux résistances thermoplastiques et une thermistance qui seront moulées avec la même résine formant à leur tour un monobloc. Cette thermistance mesure la température t1. Une deuxième thermistance mesurant la température t2 est logée sur le fil de liaison thermostat-élément chauffant, avec un surmoulage ultérieur en assurant l'étanchéité.

Les résistances proprement dites sont elles-mêmes constituées par un mélange des poudres composées :
- d'une résine phénolique,
- d'une poudre de noir de carbone,
- d'une poudre de cuivre.

La proportion des différents constituants permet l'obtention d'une résistance de valeur déterminée.

Un exemple de proportion est le suivant :
25% de résine phénolique, 50% de noir de carbone, 25% de poudre de cuivre.

Après mélange, la poudre est alors frittée sous une pression de 10 t formant alors une barrette rigide, que l'on peut onduler au moulage pour augmenter la surface de dissipation thermique.

Après compression, la barrette est alors cuite à température inférieure à 200°. Au cours de cette cuisson, le liant se détruit pour donner naissance à une matrice contenant le composé ternaire.

La barrette formée est devenue conductrice et constitue un élément chauffant de grande qualité, que l'on peut connecter grâce à deux oeillets en cuivre que l'on a pris soin de disposer dans la poudre avant la compression.

Cette résistance qui, à l'abri de l'air (ce qui est le cas dans ce moulage époxy), peut être utilisée jusqu'à 170° à 180° (température de coeur) possède en outre l'avantage, dans l'application à l'aquariophilie, de voir sa résistance augmenter lorsque la température monte.

Ce phénomène, qui est exploité, constitue une autorégulation de la température de l'élément chauffant.

# REVENDICATIONS

1 - Résistance chauffante utilisable notamment pour aquarium, caractérisée en ce qu'elle est constituée par une résistance électrique proprement dite, revêtue d'un matériau thermoconducteur étanche et moulable, tel qu'une résine de préférence, pouvant être mis en forme par des procédés connus.

2 - Résistance selon la revendication 1, caractérisé en ce que la résistance électrique proprement dite est constituée de matériaux conducteurs particulaires rendus cohérents et pouvant être mis en forme par utilisation d'une matière en polymère hydrocarboné qui est mis en forme, puis rendu conducteur par destruction thermique contrôlée.

3 - Résistance selon l'une des revendications 1 et 2, caractérisée en ce qu'elle comporte, enrobé dans une résine thermoconductrice, au moins un dispositif choisi parmi :

a) un dispositif de mesure de la température incomplètement isolé de la chaleur dégagée par ladite résistance et permettant de la protéger des surchauffes par un circuit de coupure connecté à ce dispositif de mesure de la température,

b) un dispositif de détection de l'eau destiné à commander un circuit de coupure n'autorisant la mise sous tension de la résistance que si celle-ci est environnée d'eau,

c) un dispositif destiné à mesurer la température extérieure autour de la résistance.

4 - Thermostats utilisables en aquariophilie, caractérisés en ce qu'ils comportent au moins une résistance chauffante selon l'une des revendications 1, 2 et 3, ladite résistance étant commandée, lors de son utilisation, par un dispositif électronique qui permet l'alimentation en électricité de ladite résistance suivant une fonction mathématique de la différence de température entre la température réelle de l'aquarium et la température voulue pour ledit aquarium, ou la température maximale admissible pour que la résistance ne soit pas détériorée.

5 - Thermostats selon la revendication 4, caractérisés en ce que certains ou l'ensemble des dispositifs parmi les suivants :

a) dispositifs permettant le contrôle de la température de l'aquarium,

b) dispositifs de mesure de la température interne de l'élément chauffant,

c) résistances chauffantes,

d) dispositifs contrôlant l'alimentation électrique desdites résistances en fonction du résultat fourni par les dispositifs de mesure,

e) dispositifs permettant la détection de l'eau autour des résistances, sont enrobés dans une ou plusieurs résines étanches et forment ainsi un dispositif monobloc en plusieurs parties ou en une seule partie.